# EUROPEAN PATENT SPECIFICATION

(11) **EP 2 722 264 B1**
(45) Date of publication and mention of the grant of the patent: **05.11.2014**
(21) Application number: 13186602.2
(22) Date of filing: 30.09.2013
(51) Int. Cl.: B62J 1/12, B62J 17/00

(54) **Rear structure of saddle-type vehicle**
Hinterstruktur eines Sattelfahrzeugs
Structure arrière de véhicule de type à enfourcher

(30) Priority: 17.10.2012 JP 2012229651
(43) Date of publication of application: 23.04.2014
(73) Proprietor: Honda Motor Co., Ltd., Tokyo 107-8556 (JP)
(72) Inventor: Katagiri, Kiyoshi, Wako-shi, Saitama 351-0193 (JP)
(74) Representative: Stevens, Jason Paul

(56) References cited:
- US-A1- 2005 046 250
- US-B1- 6 648 408
- US-S- D 318 448

## Description

The present invention relates to a rear structure of a saddle-type vehicle, and in particular to a rear structure which can reduce the air resistance experienced by the vehicle.

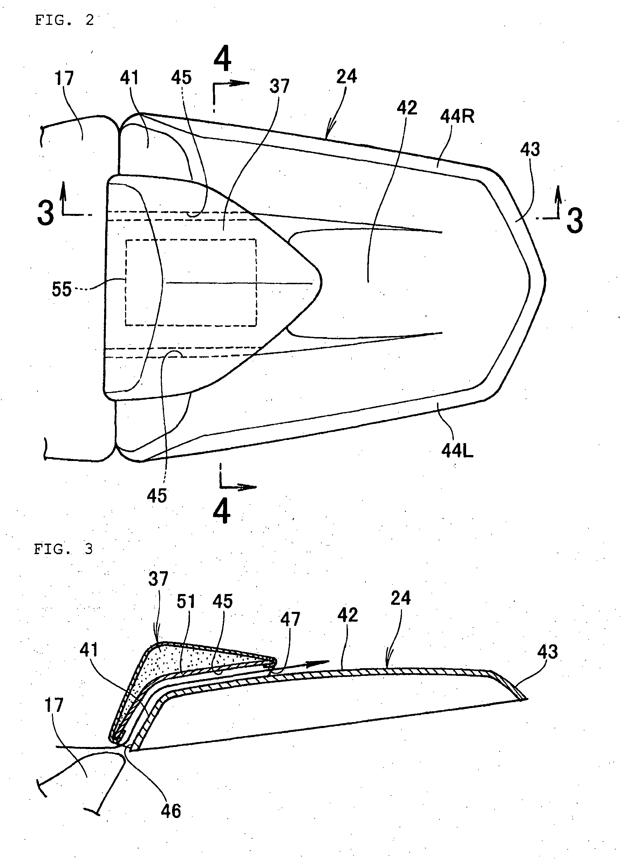

Japanese Patent Laid-Open No. 2001-80559 discloses a motorcycle in which all or part of front, side, and rear parts of the vehicle body is covered by a cowling as a measure for reducing air resistance experienced by the vehicle while travelling (see Fig. 3).

As shown in Fig. 3 of Japanese Patent Laid-Open No. 2001-80559, a motorcycle (denoted by the reference numeral 1 in Fig. 3 of Japanese Patent Laid-Open No. 2001-80559) has a fairing (denoted by the reference numeral 30) for reducing air resistance experienced by the vehicle while travelling at high speed. This fairing (30) has a rear cowl covering an upper part of the vehicle behind a rider (denoted by the reference R).

In Fig. 3 of Japanese Patent Laid-Open No. 2001-80559, the rider (R) sitting on a seat (denoted by the reference numeral 13) takes a forward tilting posture. When the rider (R) is in this forward tilting posture, the top surface of the rear cowl extends substantially on an extension of a line extending from the back of the rider (R), which extends obliquely rearwardly and downwardly, to the rear side of the vehicle. Therefore, travelling wind smoothly flows from the back of the rider (R) to the top surface of the rear cowl.

However, because the back of the rider (R) is separate from the rear cowl, a part of the travelling wind can enter the gap between the rider (R) and the rear cowl. Because the travelling wind that enters the gap between the rider (R) and the rear cowl loses its way, disturbance may occur in the travelling wind moving from the rider's back to the rear cowl. Accordingly, a further reduction in the air resistance experienced by the vehicle while travelling is desired.

It is an aim of at least the preferred embodiments of the present invention to provide a rear structure of a saddle-type vehicle allowing further reduction in air resistance experienced by a vehicle while travelling.

According to a first aspect of the invention, there is provided a rear structure of a saddle-type vehicle, that includes a rider seat on which a rider sits and an additional member located to the rear of the rider seat and in which a cushion seat to support a rear part of the rider is attached to an upper part of the additional member, **characterized in that** a groove part through which travelling wind can flow is formed between the additional member and the cushion seat, and an intake port to take in the travelling wind and a discharge port to discharge the travelling wind taken in from the intake port to the rear of the vehicle are formed in at least one of the additional member and the cushion seat in order for the travelling wind to flow into the groove part.

In a first preferred form, said additional member is a cowl covering a vehicle body to the rear of the rider seat, and said cushion seat is attached to an upper part of the cowl.

With this arrangement, the groove part is formed between the cowl and the cushion seat. Part of the travelling wind that has passed along the back of the rider and reached the rear part of the rider seat passes through the groove part to be discharged to the rear of the vehicle.

Conventionally, if the cushion seat is placed on the cowl, part of the travelling wind that has passed along the back of the rider enters the gap between the cowl and the back of the rider, and it is possible for the flow of this travelling wind that has entered to get disturbed between the cowl and the back of the rider.

However, when the groove part is formed between the cowl and the cushion seat, the travelling wind taken in by the intake port passes through the groove part to flow from the discharge port to the rear of the vehicle. Thus, the travelling wind that has entered the gap between the cowl and the rider can be let out and the disturbance of the air can be reduced. As a result, the air resistance experienced by the vehicle can be further reduced.

In a second preferred form, said additional member is a passenger seat on which a passenger sits to the rear of the rider seat, and said cushion seat is attached to an upper part of the passenger seat.

With this arrangement, the groove part is formed between the passenger seat and the cushion seat. Part of the travelling wind that has passed along the back of the rider and reached the rear part of the rider seat passes through the groove part to be discharged to the rear of the vehicle. Thus, the travelling wind that has entered the gap between the passenger seat and the rider can be let out and the disturbance of the air can be reduced. As a result, the air resistance experienced by the vehicle can be further reduced.

In a third preferred form, the structure further comprises a passenger seat on which a passenger sits to the rear of the rider seat, the passenger seat being integrated with the rider seat to form a tandem seat, said additional member is a cowl covering part of the tandem seat from above, and said cushion seat is attached to a top surface of said cowl.

With this arrangement, the groove part is formed between the cowl and the cushion seat. Part of the travelling wind that has reached the rear part of the rider seat passes through the groove part to be discharged to the rear of the vehicle. Thus, the travelling wind flowing between the cowl and the back of the rider can be let out and the disturbance of the air can be reduced. As a result, the air resistance experienced by the vehicle can be further reduced.

Further, the cushion seat is attached to the top surface of the cowl covering part of the tandem seat. By changing the shape and position of the cushion seat, the design of the tandem seat can be easily changed. As a result, it is possible to make adjustments easily, allowing diversification of products.

Preferably, a double-sided tape is attached to the cowl, the passenger seat, or the cushion seat, and the cushion seat is detachably attached to the top surface of the cowl or the passenger seat by the double-sided tape.

With this arrangement, the cushion seat can be replaced, and so the design of a vehicle rear part can be easily changed.

Preferably, the groove part extends in a substantially straight line in the longitudinal direction of the vehicle, and the cross-sectional areas of the intake port and the discharge port are substantially the same as the cross-sectional area of the groove part.

With this arrangement, the travelling wind that has entered the groove part from the intake port is discharged from the discharge port to the rear of the vehicle without change in its flow velocity. As a result, energy loss in the passage through the groove part can be suppressed to the minimum.

Preferably, the intake port, the groove part, and the discharge port are each made as a pair of elements, one of the pair at the left of the vehicle and one of the pair at the right of the vehicle.

Thus, the area of the contact of the cushion seat with the cowl becomes larger as the width of the groove parts is decreased. If the width of the left and right groove parts is decreased to increase the area of the cowl surface supporting the cushion seat, the cushion seat of a soft type can be placed.

Preferred embodiments of the invention will now be described by way of example only and with reference to the accompanying drawings, in which:
FIG. 1 is a left side view of a motorcycle according to a first embodiment of the present invention;
FIG. 2 is a view taken along arrow 2 in FIG. 1;
FIG. 3 is a sectional view taken along line 3-3 in FIG. 2;
FIG. 4 is a sectional view taken along line 4-4 in FIG. 2;
FIG. 5 is an explanatory diagram of the effect of groove parts formed between a cowl and a cushion seat;
FIG. 6 is an explanatory diagram of the effect of the motorcycle according to the present invention;
FIG. 7 is a plan view of a vehicle rear part, corresponding to FIG. 2, according to a second embodiment of the present invention;
FIG. 8 is a sectional view taken along line 8-8 in FIG. 7;
FIG. 9 is a sectional view of a vehicle rear part, corresponding to FIG. 8, according to a third embodiment of the present invention;
FIG. 10 is an exploded perspective view of the vehicle rear part according to the third embodiment;
FIG. 11 is a sectional view of a vehicle rear part, corresponding to FIG. 9, according to a fourth embodiment of the present invention;
FIG. 12 is an explanatory diagram of the effect of a groove part formed between the cowl and the cushion seat according to the fourth embodiment, with the cowl viewed obliquely from the front side;
FIG. 13 is an explanatory diagram of the effect of the groove part formed between the cowl and the cushion seat according to the fourth embodiment, with the cowl viewed obliquely from the rear side;
FIG. 14 is a side view of a vehicle rear part according to a fifth embodiment of the present invention; and
FIG. 15 is a sectional view taken along line 15-15 in FIG. 14.

Embodiments of the present invention will be described in detail below. In the drawings and descriptions of the embodiments, expressions such as "up", "down", "front", "rear", "left" and "right" represent a direction as viewed from the viewpoint of a rider riding on a motorcycle.

A first embodiment of the present invention will now be described based on the drawings.

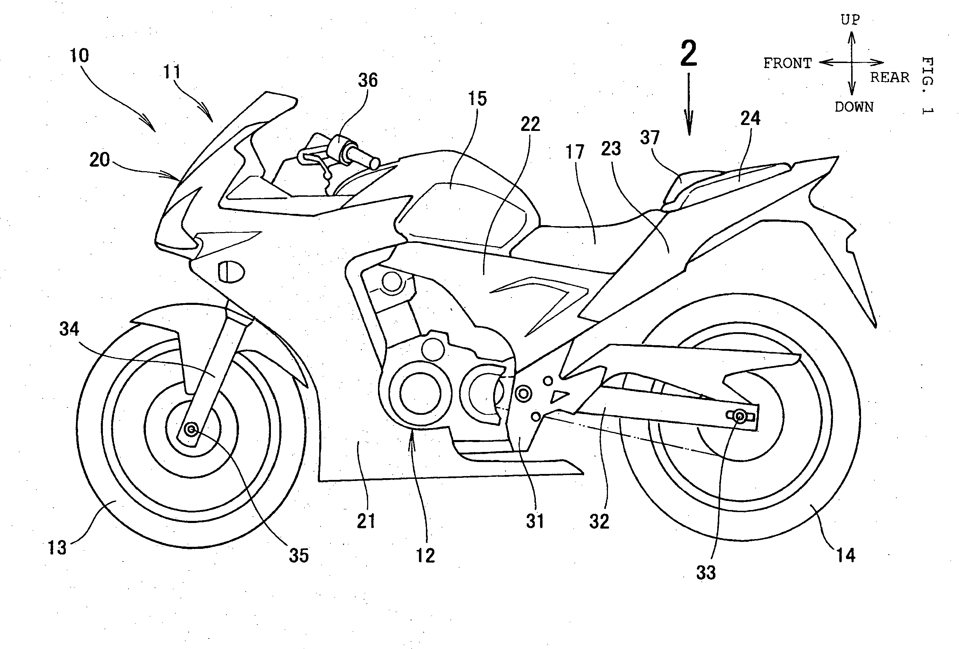

As shown in FIG. 1, a motorcycle 10 includes an engine 12 suspended on a vehicle body 11, a front wheel 13 disposed forward of the engine 12, and a rear wheel 14 disposed rearward of the engine 12. The motorcycle 10 further includes a fuel tank 15 provided at an upper part of the vehicle body 11 between the front wheel 13 and the rear wheel 14, a rider seat 17 that is provided continuously with the fuel tank 15 and on which a rider sits, and a cowl 20 covering the vehicle body 11. A vehicle body frame is included in the vehicle body 11.

The rear wheel 14 is rotatably attached by means of a rear wheel shaft 33 to the rear end of a swing arm 32, which extends rearwardly from a pivot frame 31. The front wheel 13 is supported at the lower end of a front fork 34 by means of a front wheel shaft 35, so that the front wheel 13 is rotatable and movable in the height direction. A handlebar 36 for steering the front wheel 13 is attached to the upper end of the front fork 34.

The cowl 20 covering the vehicle body 11 will now be described. The cowl 20 is composed of the following components: a front cowl 21 that extends from a front area to a side area and covers a front part of the vehicle body 11; mid cowls 22 that extend rearwardly from an upper part of this front cowl 21 and cover a lower part of the fuel tank 15 and a lower part of the rider seat 17; rear side cowls 23 extending rearwardly from the mid cowls 22; and a rear top cowl 24 that covers a gap between the rear side cowls 23 from above and is disposed behind the rider seat 17. The mid cowls 22 are provided as a pair of components on the left and right sides of the vehicle. The cowl 20 serves to reduce air resistance experienced by the vehicle body 11 while travelling and also enhances the appearance of the vehicle body 11. Hereinafter, the rear top cowl 24 will be referred to simply as the cowl 24, for convenience of description. A cushion seat 37 to support a rear part of the rider is attached to an upper part of the cowl 24. A passenger seat may be provided behind the rider seat instead of the cowl.

In the following, with reference to FIGS. 2 to 4, a description will be made of details of a groove part which allows travelling wind that has reached a rear part of the rider seat to flow out to the rear of the vehicle.

As shown in FIG. 2, the cowl 24 is disposed so as to be continuous with the rear side of the rider seat 17, and the cushion seat 37 for supporting the rear part of the rider is disposed on the upper part of this cowl 24. The cowl 24 is composed of the following parts: a front wall 41 extending obliquely rearwardly and upwardly; a ceiling part 42 extending rearwardly from the front wall 41 with a gently curved surface that is upwardly convex; a rear wall 43 extending obliquely rearwardly and downwardly from the rear end of the ceiling part 42; and left and right sidewalls 44L and 44R that extend downward from the left and right edges of the ceiling part 42 and extend between the ceiling part 42, the front wall 41 and the rear wall 43. The cushion seat 37 is a member that has a width smaller than that of the cowl 24 and a longitudinal extent that is shorter than the length of the cowl 24 in the longitudinal direction. The cushion seat 37 is placed over an area from the front wall 41 to the ceiling part 42 of the cowl 24, and is placed on the front wall 41 and part of the ceiling part 42.

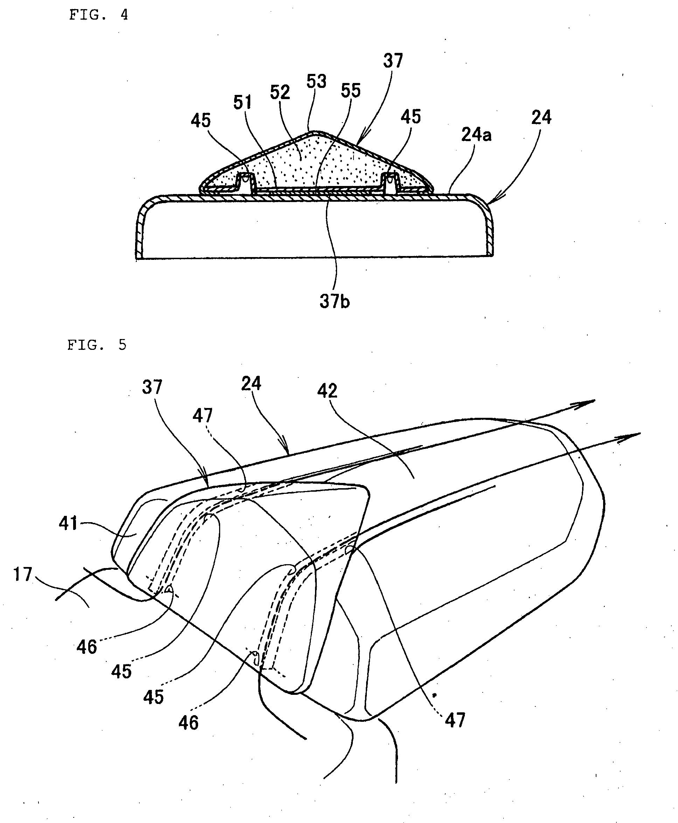

As shown in FIGS. 3 and 4, groove parts 45 through which travelling wind can pass are formed in the cushion seat 37 between the cowl 24 and the cushion seat 37. The groove parts 45 are formed by recesses extending upwardly from a bottom plate 51 of the cushion seat 37.

In order to allow travelling wind to flow through the groove parts 45, intake ports 46 to take in travelling wind and discharge ports 47 to discharge the travelling wind taken in from the intake ports 46 to the rear of the vehicle are formed in the cushion seat 37.

As shown in FIG. 4, the cushion seat 37 is composed of the following components: the bottom plate 51 that is formed along a top surface 24a of the cowl 24 and abuts against the top surface 24a; a cushion material 52 placed on the bottom plate 51; and a surface skin 53 that covers the periphery of the cushion material 52 and holds the cushion material 52 in a predetermined shape. In the bottom plate 51, the groove parts 45 made by the upwardly-extending recesses are each made as a pair of elements, one of the pair at the left of the vehicle and one of the pair at the right of the vehicle. By placing such a cushion seat 37 on the cowl 24, the groove parts 45 allowing the flow of travelling wind are formed between the cowl 24 and the cushion seat 37. The groove parts 45 extend in a substantially straight line in the longitudinal direction of the vehicle, and the cross-sectional areas of the intake ports (FIG. 3, symbol 46) and the discharge ports (FIG. 3, symbol 47) are substantially the same as that of the groove parts 45.

A double-sided tape 55 is attached to the top surface 24a of the cowl 24. By means of this double-sided tape 55, a lower surface 37b of the cushion seat 37 is detachably attached to the top surface 24a of the cowl 24. This allows the cushion seat 37 to be replaced. Therefore, the design of the vehicle rear part can be easily changed.

As shown in FIG. 2, the double-sided tape 55 is attached to the cowl 24 over an area from the front wall 41 to the ceiling part 42. Because the double-sided tape 55 is attached over the two surfaces of the front wall 41 and the ceiling part 42 which have different orientations, the cushion seat 37 is also attached over the two surfaces of the front wall 41 and the ceiling part 42. As a result, compared with a case in which the double-sided tape is attached to only one surface, shifting of the cushion seat 37 relative to the cowl 24 can be made less likely and the cushion seat 37 can be attached to the cowl 24 more surely.

Although a structure in which the cushion seat is attached to the upper part of the cowl has been described in the present embodiment example, a passenger seat may be disposed behind the rider seat instead of the cowl, and the cushion seat may be attached to an upper part of this passenger seat.

The effect of the above-described structure, in which groove parts are formed between the rear cowl and the cushion seat, will be described below.

As shown in FIG. 5, the groove parts 45 formed in the cushion seat 37 are formed as a pair of left and right groove parts. In step with this, the intake ports 46 and the discharge ports 47 are also formed as a pair of left and right ports. The area of contact between the cushion seat 37 and the cowl 24 becomes larger as the width of the groove parts 45 is decreased. If the width of the left and right groove parts 45 is decreased to increase the area of the cowl top surface 24a supporting the cushion seat 37 as above, even the cushion seat 37 including the cushion material 52 of a soft type can be easily placed.

The groove parts 45 extend in a substantially straight line in the longitudinal direction of the vehicle and the cross-sectional areas of the intake ports 46 and the discharge ports 47 are set so as to be substantially the same as the cross-sectional area of the groove parts 45. Travelling wind that has entered the groove parts 45 from the intake ports 46 is discharged from the discharge ports 47 to the rear of the vehicle without appreciable change in its flow velocity. As a result, energy loss in the passage of the wind through the groove parts 45 can be kept to a minimum.

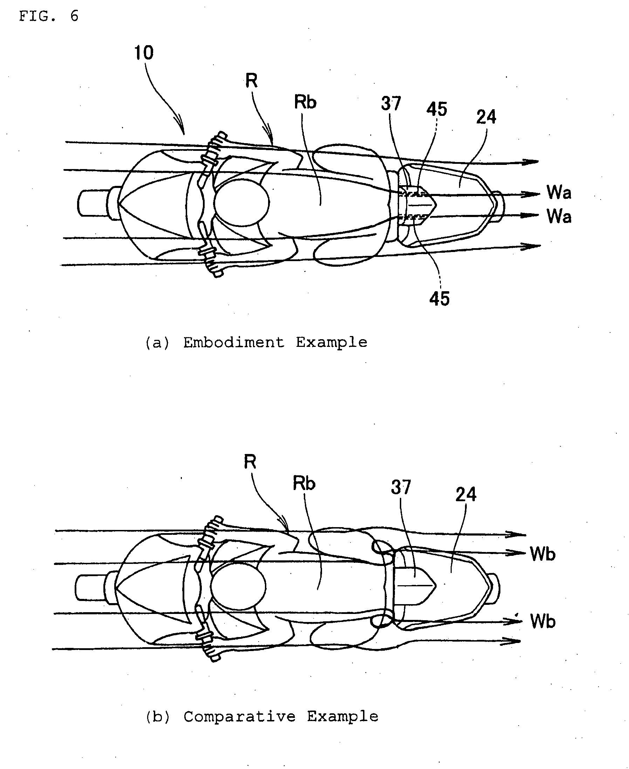

FIG. 6(a) is an explanatory diagram of a motorcycle with a rear structure according to the first embodiment, and FIG. 6(b) is an explanatory diagram of a motorcycle with a rear structure according to a comparative example.

As shown in FIG. 6(a), left and right groove parts 45 are formed between the cowl 24 and the cushion seat 37. Some of the travelling wind that has passed along a back Rb of a rider R and reached the rear part of the rider seat (FIG. 1, symbol 17) passes through the groove parts 45 to be discharged to the rear of the vehicle.

As shown in FIG. 6(b), if a cushion seat 37 with no groove parts 45 is placed on the cowl 24, part of the travelling wind that has passed along the back Rb of the rider R can enters a gap between the cowl 24 and the back Rb of the rider R, as shown by arrows Wb in the drawing. In this case, because no grooves are formed, the travelling wind that has entered the gap between the cowl 24 and the back Rb of the rider R has no escape path, and the air flow often gets disturbed.

In FIG. 6(a), the left and right groove parts 45 are formed in the cushion seat 37 behind the rider seat 17. Travelling wind taken in by the intake ports 46 passes through the left and right groove parts 45 to flow from the discharge ports 47 to the rear of the vehicle as shown by arrows Wa in the drawing. Due to this, the travelling wind flowing between the cowl 24 and the back Rb of the rider R can be smoothly let out to the rear of the vehicle, and disturbance of the air can be reduced. As a result, the air resistance experienced by the motorcycle 10 can be further reduced.

In FIG. 5, the groove parts 45 extend in a substantially straight line in the longitudinal direction of the vehicle. In addition, the cross-sectional areas of the intake ports 46 and the discharge ports 47 of the groove parts 45 are set to be substantially the same as that of the groove parts 45. Travelling wind that has entered the groove parts 45 from the intake ports 46 is discharged from the discharge ports 47 to the rear of the vehicle without change in its flow velocity. As a result, energy loss of the travelling wind can be suppressed to the minimum in its passage through the groove parts 45.

Next, a second embodiment of the present invention will be described.

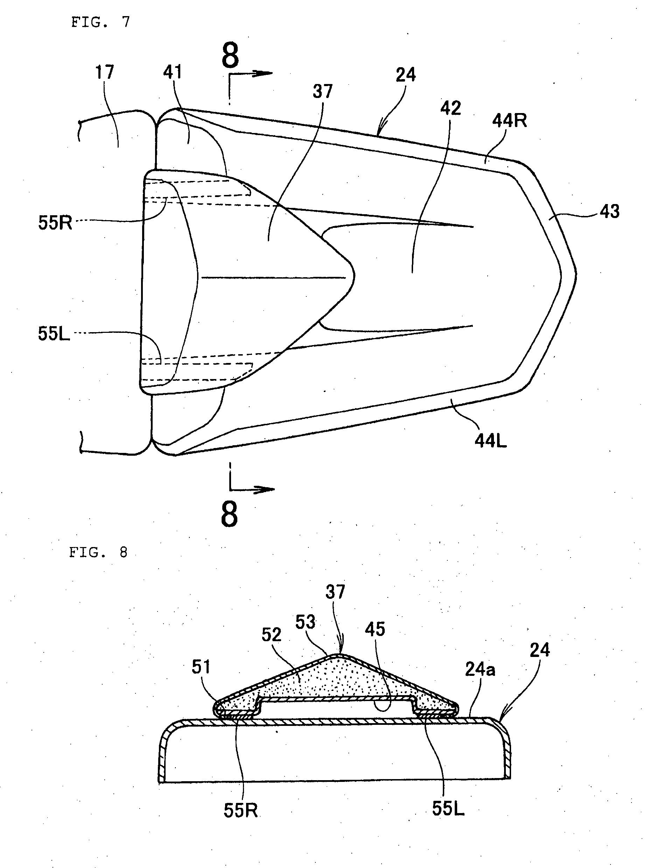

As shown in FIG. 7, the cowl 24 is disposed so as to be continuous with the rear of the rider seat 17, and the cushion seat 37 is placed on the upper part of the cowl 24. As before, the cowl 24 is composed of the front wall 41, the ceiling part 42 extending rearward from the front wall 41, the rear wall 43 obliquely extending rearward and downward from the rear end of the ceiling part 42, and the left and right sidewalls 44L and 44R extending between the ceiling part 42 and the front wall 41 and the rear wall 43.

As shown in FIG. 8, the cushion seat 37 is composed of the bottom plate 51 placed on the top surface 24a of the cowl 24, the cushion material 52 placed on the bottom plate 51, and the surface skin 53 that covers the cushion material 52 and holds it in a predetermined shape. One groove part 45 made by an upwardly extending recess is formed in the bottom plate 51, and left and right double-sided tapes 55L and 55R are attached to the top surface 24a of the cowl 24 at positions laterally outside the groove part 45. By placing such a cushion seat 37 on the cowl 24, the groove part 45 allowing the flow of travelling wind is formed between the cowl 24 and the cushion seat 37. The remainder of the structure and its effects are not greatly different from those of the first embodiment, and therefore description thereof is omitted.

Next, a third embodiment of the present invention will be described.

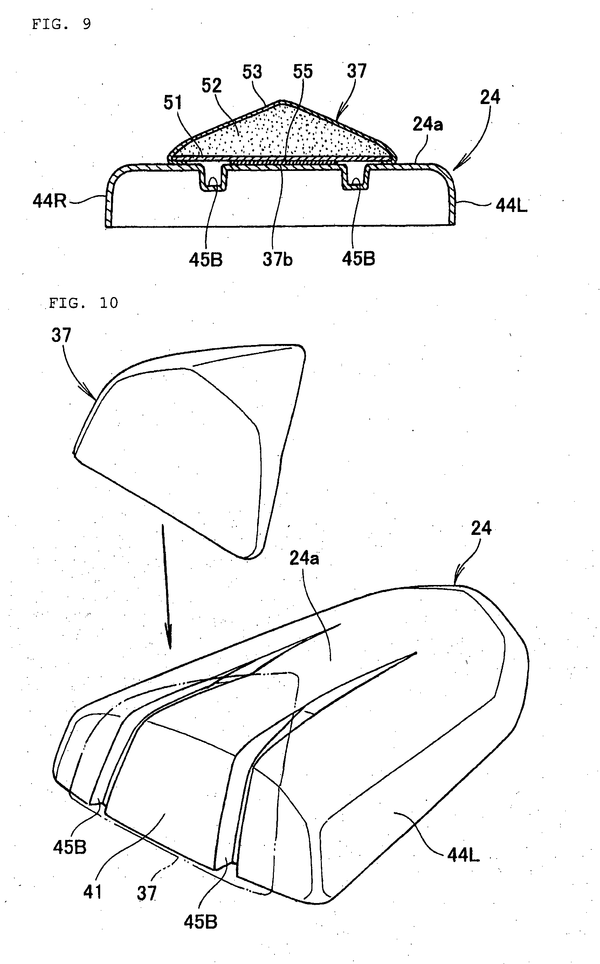

As shown in FIG. 9, groove parts 45B are formed between the cowl 24 and the cushion seat 37. Specifically, the groove parts 45B are formed by downwardly extending recesses formed in the top surface 24a of the cowl 24, and are formed on the left and right sides in the lateral direction of the vehicle. The double-sided tape 55 is attached to the top surface 24a of the cowl 24, and the lower surface 37b of the cushion seat 37 is attached to the double-sided tape 55.

As shown in FIG. 10, the cushion seat 37 is attached over the front wall 41 of the cowl 24 and the top surface 24a of the cowl 24 in such a manner as to cover the left and right groove parts 45B.

A large difference of the third embodiment from the first embodiment is that the groove parts 45 allowing the flow of travelling wind are formed in the part of the cowl 24 abutting against the cushion seat 37. The remainder of the structure is not greatly different from that of the first embodiment, and therefore description thereof is omitted.

Incidentally, the grooves allowing the passage of travelling wind may be formed in both of the cushion seat and the cowl, at the same lateral position.

Next, a fourth embodiment of the present invention will be described.

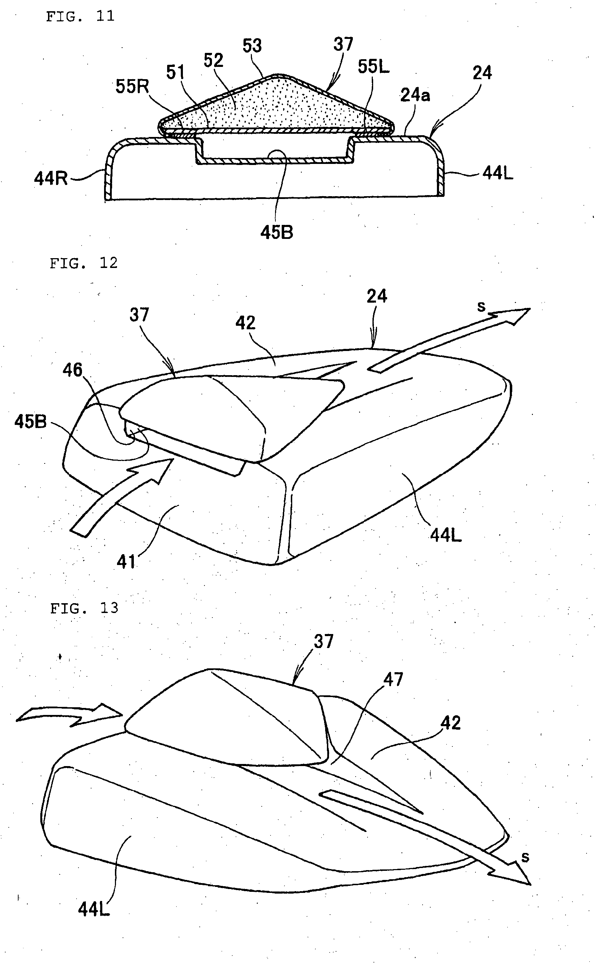

As shown in FIG. 11, the cushion seat 37 is composed of the bottom plate 51, the cushion material 52 placed on the bottom plate 51, and the surface skin 53 covering the cushion material 52. In the top surface 24a of the cowl 24, one groove part 45B made by a downwardly extending recess is formed. By placing the cushion seat 37 on such a cowl 24, the groove part 45B allowing the flow of travelling wind is formed between the cowl 24 and the cushion seat 37. The remainder of the structure is not greatly different from that of the first embodiment, and therefore description thereof is omitted.

Next, the effect of the fourth embodiment will be described.

As shown in FIGS. 11 to 13, travelling wind that has entered the groove part 45B from the intake port 46 passes through the groove part 45B to flow from the discharge port 47 as shown by an arrow s in the drawings. The groove part 45B extends in a substantially straight line in the longitudinal direction of the vehicle and the cross-sectional areas of the intake port 46 and the discharge port 47 are set so as to be substantially the same as that of the groove part 45B. Because the cross-sectional area of the respective parts of the groove part 45B is constant, travelling wind is discharged from the discharge port 47 to the rear of the vehicle without change in its flow velocity. As a result, energy loss of the travelling wind can be suppressed to the minimum in its passage through the groove part 45B.

Next, a fifth embodiment of the present invention will be described.

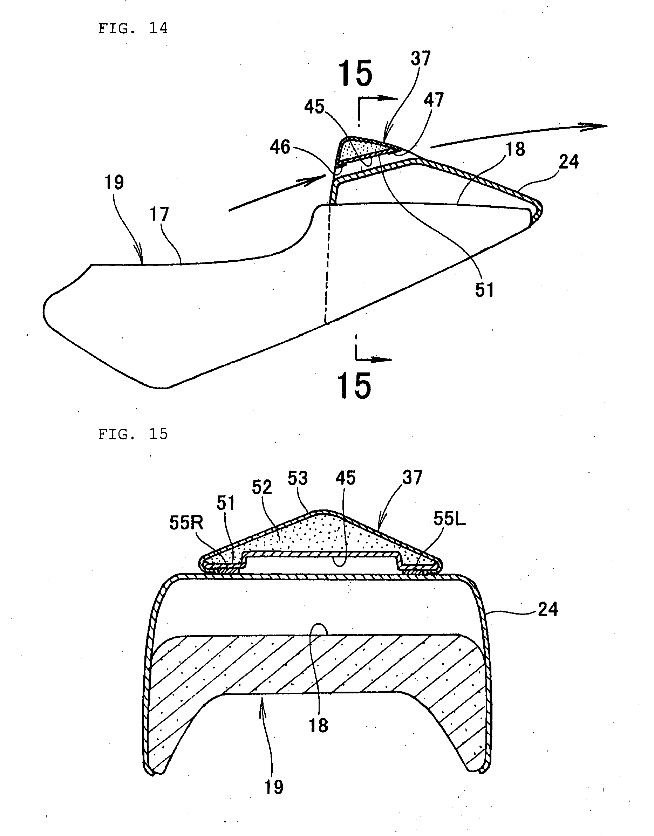

As shown in FIGS. 14 and 15, a tandem seat 19 made by integrating the rider seat 17 on which a rider sits with a passenger seat 18 on which a passenger sits behind the rider seat 17 is provided at a rear part of a saddle-type vehicle (motorcycle). The passenger seat 18 of the tandem seat 19 is covered by the cowl 24 to support the rider, and the cushion seat 37 is placed on and attached to a front and upper part of this cowl 24. In the bottom plate 51 of the cushion seat 37, the groove part 45 is formed by an upwardly extending recess so as to allow the flow of travelling wind.

The groove part 45 through which travelling wind flows is formed between the cowl 24 and the cushion seat 37, and specifically in the cushion seat 37. In order for travelling wind to flow into this groove part 45, the intake port 46 to take in travelling wind and the discharge port 47 to discharge the travelling wind taken in from this intake port 46 to the rear of the vehicle are formed in the cushion seat 37.

The groove part may be formed in the cowl, instead of the cushion seat. Alternatively, the groove part may be formed in the cowl in addition to being formed in the cushion seat.

Part of the travelling wind that has reached the rear part of the rider seat 17 passes through the groove part 45 formed between the cowl 24 and the cushion seat 37 to be discharged to the rear of the vehicle.

Conventionally, if the cushion seat is placed on the passenger seat or the cowl, a part of travelling wind that has passed along the back of the rider enters the gap between the cowl and the back of the rider, and the air flow can get disturbed.

However, in the present invention, the groove part 45 is formed between the cowl 24 and the cushion seat 37 to the rear of the rider seat 17. Travelling wind taken in by the intake port 46 passes through the groove part 45 to flow from the discharge port 47 to the rear of the vehicle. Due to this, the travelling wind flowing between the cowl 24 and the back of the rider (FIG. 6(a), symbol Rb) can be let out and disturbance of the air can be reduced. As a result, air resistance experienced by the vehicle can be further reduced.

Furthermore, the cushion seat 37 is attached to the top surface 24a of the cowl 24 covering part of the tandem seat 19. By changing the shape and position of the cushion seat 37 for example, the design of the tandem seat 19 can be easily changed. As a result, it is possible to make easy adjustments, allowing diversification of products.

Although the present invention is applied to a motorcycle in the embodiments, it can also be applied to a saddle-type three-wheeled vehicle and may be applied more generally to saddle-type vehicles.

The present invention is suitable for a motorcycle in which a groove part to let out travelling wind is formed between a cowl and a cushion seat located to the rear of a rider seat.

## Claims

1. A rear structure of a saddle-type vehicle, said rear structure including a rider seat (17) on which a rider sits and an additional member (18, 24) located to the rear of the rider seat (17) and in which a cushion seat (37) to support a rear part of the rider is attached to an upper part of the additional member (18, 24), **characterized in that**
a groove part (45) through which travelling wind can flow is formed between the additional member (24) and the cushion seat (37), and
an intake port (46) to take in the travelling wind and a discharge port (47) to discharge the travelling wind taken in from the intake port (46) to the rear of the vehicle are formed in at least one of the additional member (18, 24) and the cushion seat (37) in order for the travelling wind to flow into the groove part (45).

2. A rear structure of a saddle-type vehicle as claimed in claim 1, wherein said additional member is a cowl (24) covering a vehicle body to the rear of the rider seat (17), and in which said cushion seat (37) is attached to an upper part of the cowl (24).

3. A rear structure of a saddle-type vehicle as claimed in claim 1, wherein said additional member is a passenger seat (18) on which a passenger sits to the rear of the rider seat (17), and in which said cushion seat (37) is attached to an upper part of the passenger seat (18).

4. A rear structure of a saddle-type vehicle as claimed in claim 1, further comprising a passenger seat (18) on which a passenger sits to the rear of the rider seat (17), the passenger seat (18) being integrated with the rider seat (17) to form a tandem seat (19), wherein said additional member is a cowl (24) covering part of the tandem seat (19) from above, and in which said cushion seat (37) is attached to a top surface (24a) of said cowl (24).

5. The rear structure of a saddle-type vehicle according to claim 2, claim 3, or claim 4, **characterized in that**
a double-sided tape (55) is attached to the cowl (24), the passenger seat (18), or the cushion seat (37), and the cushion seat (37) is detachably attached to the top surface (24a) of the cowl (24) or the passenger seat (18) by the double-sided tape (55).

6. The rear structure of a saddle-type vehicle according to any preceding claim, **characterized in that**
the groove part (45) extends in a substantially straight line in the longitudinal direction of the vehicle, and
the cross-sectional areas of the intake port (46) and the discharge port (47) are substantially the same as the cross-sectional area of the groove part (45).

7. The rear structure of a saddle-type vehicle according to any preceding claim, **characterized in that**
the intake port (46), the groove part (45), and the discharge port (47) are each made as a pair of elements, one of the pair at the left of the vehicle and one of the pair at the right of the vehicle.

## Patentansprüche

1. Heckstruktur eines Fahrzeug des Typs mit Sattel, wobei die Heckstruktur einen Fahrersitz (17) aufweist, auf dem ein Fahrer sitzt, und ein zusätzliches Element (18, 24), das sich an der Rückseite des Fahrersitzes (17) befindet, und in dem ein Sitzkissen (37) zum Stützen eines hinteren Teils des Fahrers an einem oberen Teil des zusätzlichen Elements (18, 24) angebracht ist, **dadurch gekennzeichnet, dass**
ein Hohlkehlenteil (45), durch das Fahrtwind strömen kann, zwischen dem zusätzlichen Element (24) und dem Sitzkissen (37) ausgebildet ist, und
eine Einlassöffnung (46), um den Fahrtwind aufzunehmen, und eine Auslassöffnung (47), um den Fahrtwind, der von der Einlassöffnung (46) aufgenommen wird, zu der Rückseite des Fahrzeugs auszulassen, in dem zusätzlichen Element (18, 24) und/oder dem Sitzkissen (37) ausgebildet sind, damit der Fahrtwind in das Hohlkehlenteil (45) strömen kann.

2. Heckstruktur eines Fahrzeugs des Typs mit Sattel nach Anspruch 1, wobei das zusätzliche Element ein Windlauf (24) ist, der eine Fahrzeugkarosserie hinter dem Fahrersitz (17) abdeckt, und wobei das Sitzkissen (37) an einem oberen Teil des Windlaufs (24) angebracht ist.

3. Heckstruktur eines Fahrzeugs des Typs mit Sattel nach Anspruch 1, wobei das zusätzliche Element ein Beifahrersitz (18) ist, auf dem ein Beifahrer hinter dem Fahrersitz (17) sitzt, und an dem das Sitzkissen (37) an einem oberen Teil des Beifahrersitzes (18) angebracht ist.

4. Heckstruktur eines Fahrzeugs des Typs mit Sattel nach Anspruch 1, die ferner einen Beifahrersitz (18) aufweist, auf dem ein Beifahrer hinter dem Fahrersitz (17) sitzt, wobei der Beifahrersitz (18) in den Fahrersitz (17) integriert ist, um einen Tandemsitz (19) auszubilden, wobei das zusätzliche Element ein Windlauf (24) ist, der einen Teil des Tandemsitzes (19) von oben her abdeckt, und wobei das Sitzkissen (37) an einer oberen Oberfläche (24a) des Windlaufs (24) angebracht ist.

5. Heckstruktur eines Fahrzeugs des Typs mit Sattel nach Anspruch 2, Anspruch 3 oder Anspruch 4, **dadurch gekennzeichnet, dass**
ein doppelseitiges Klebeband (55) an dem Windlauf (24), dem Beifahrersitz (18) und dem Sitzkissen (37) angebracht ist, und das Sitzkissen (37) abnehmbar an der oberen Oberfläche (24a) des Windlaufs (24) des Beifahrersitzes (18) mit dem doppelseitigen Klebeband (55) angebracht ist.

6. Heckstruktur eines Fahrzeug des Typs mit Sattel nach einem der vorhergehenden Ansprüche, **dadurch gekennzeichnet, dass**
sich das Hohlkehlenteil (45) in einer im Wesentlichen geraden Linie in die Längsrichtung des Fahrzeugs erstreckt, und
Querschnittflächen der Einlassöffnung (46) und der Auslassöffnung (47) im Wesentlichen gleich sind wie die Querschnittfläche des Hohlkehlenteils (45).

7. Heckstruktur eines Fahrzeugs des Typs mit Sattel nach einem der vorhergehenden Ansprüche, **dadurch gekennzeichnet, dass**
die Einlassöffnung (46), das Hohlkehlenteil (45) und die Auslassöffnung (47) jeweils als ein Paar von Elementen ausgebildet sind, eines des Paars auf der linken Seite des Fahrzeugs und das andere das Paars auf der rechten Seite des Fahrzeugs.

## Revendications

1. Structure arrière d'un véhicule de type à selle, ladite structure arrière incluant un siège de conducteur (17) sur lequel un conducteur s'assoit et un élément supplémentaire (18, 24) situé à l'arrière du siège de conducteur (17) et dans lequel un siège à coussin (37) pour supporter une partie arrière du conducteur est attaché à une partie supérieure de l'élément supplémentaire (18, 24), **caractérisée en ce que**
une partie formant rainure (45) à travers laquelle un vent en mouvement peut s'écouler est formée entre l'élément supplémentaire (24) et le siège à coussin (37), et
un orifice d'admission (46), pour admettre le vent en mouvement, et un orifice de décharge (47), pour décharger le vent en mouvement admis à partir de l'orifice d'admission (46) vers l'arrière du véhicule, sont formés dans au moins un de l'élément supplémentaire (18, 24) et du siège à coussin (37) afin que le vent en mouvement s'écoule dans la partie formant rainure (45).

2. Structure arrière d'un véhicule de type à selle selon la revendication 1, dans laquelle ledit élément supplémentaire est un capot (24) couvrant une carrosserie de véhicule à l'arrière du siège de conducteur (17), et dans laquelle ledit siège à coussin (37) est attaché à une partie supérieure du capot (24).

3. Structure arrière d'un véhicule de type à selle selon la revendication 1, dans laquelle ledit élément supplémentaire est un siège de passager (18) sur lequel un passager s'assoit à l'arrière du siège de conducteur (17), et dans laquelle ledit siège à coussin (37) est attaché à une partie supérieure du siège de passager (18).

4. Structure arrière d'un véhicule de type à selle selon la revendication 1, comprenant en outre un siège de passager (18) sur lequel un passager s'assoit à l'arrière du siège de conducteur (17), le siège de passager (18) étant intégré avec le siège de conducteur (17) pour former un siège tandem (19), dans laquelle ledit élément supplémentaire est un capot (24) couvrant une partie du siège tandem (19) par le dessus, et dans laquelle ledit siège à coussin (37) est attaché à une surface supérieure (24a) dudit capot (24).

5. Structure arrière d'un véhicule de type à selle selon la revendication 2, la revendication 3, ou la revendication 4, **caractérisée en ce que**
un ruban double face (55) est attaché au capot (24), au siège de passager (18), ou au siège à coussin (37), et le siège à coussin (37) est attaché de façon amovible à la surface supérieure (24a) du capot (24) ou du siège de passager (18) par le ruban double face (55).

6. Structure arrière d'un véhicule de type à selle selon l'une quelconque des revendications précédentes, **caractérisée en ce que**
la partie formant rainure (45) s'étend dans une ligne sensiblement droite dans la direction longitudinale du véhicule, et
les surfaces en coupe transversale de l'orifice d'admission (46) et de l'orifice de décharge (47) sont sensiblement les mêmes que la surface en coupe transversale de la partie formant rainure (45).

7. Structure arrière d'un véhicule de type à selle selon l'une quelconque des revendications précédentes, **caractérisée en ce que**
l'orifice d'admission (46), la partie formant rainure (45) et l'orifice de décharge (47) sont faits chacun comme un couple d'éléments, 1 un des deux à la gauche du véhicule et un des deux à la droite du véhicule.
